# EUROPÄISCHE PATENTSCHRIFT

(11) **EP 4 238 119 B1**
(45) Veröffentlichungstag und Bekanntmachung des Hinweises auf die Patenterteilung: **05.03.2025**
(21) Anmeldenummer: 21815464.9
(22) Anmeldetag: 17.11.2021
(51) Int. Cl.: H01H 71/04, H02H 1/00, H01H 9/16, H01H 83/20

(54) **SCHUTZSCHALTGERÄT UND VERFAHREN**
CIRCUIT BREAKER DEVICE AND METHOD
PROCÉDÉ ET DISPOSITIF DISJONCTEUR

(30) Priorität: 21.12.2020 DE 102020216429
(43) Veröffentlichungstag der Anmeldung: 06.09.2023
(73) Patentinhaber: Siemens Aktiengesellschaft, 80333 München (DE)
(72) Erfinder: DHANRAJ, Vinod Gideon, 82178 Puchheim (DE); MARTEL, Jean-Mary, 93105 Tegernheim (DE); SCHMID, Bernhard, 93133 Burglengenfeld (DE)
(74) Vertreter: Siemens Patent Attorneys
(86) Internationale Anmeldenummer: PCT/EP2021/082026
(87) Internationale Veröffentlichungsnummer: WO 2022/135799

(56) Entgegenhaltungen:
- EP-A1- 2 587 513
- EP-A1- 3 726 560
- DE-A1- 10 253 018
- DE-A1- 102005 039 573
- DE-A1- 102007 047 920
- DE-A1- 102018 219 692
- US-A1- 2004 136 124
- US-A1- 2015 070 026

## Beschreibung

Die Erfindung betrifft das technische Gebiet eines Schutzschaltgeräts für einen Niederspannungsstromkreis, wie einen Leitungsschutzschalter, nach dem Oberbegriff von Patentanspruch 1 und ein Verfahren für ein Schutzschaltgerät für einen Niederspannungsstromkreis nach dem Oberbegriff von Patentanspruch 9.

Mit Niederspannung sind Spannungen von bis zu 1000 Volt Wechselspannung oder bis zu 1500 Volt Gleichspannung gemeint. Mit Niederspannung sind insbesondere Spannungen gemeint, die größer als die Kleinspannung, mit Werten von 50 Volt Wechselspannung bzw. 120 Volt Gleichspannung, sind.

Mit Niederspannungsstromkreis bzw. -netz oder -anlage sind Stromkreise mit Nennströmen bzw. Bemessungsströmen von bis zu 125 Ampere, spezifischer bis zu 63 Ampere gemeint.

Leitungsschutzschalter sind seit langem bekannte Überstromschutzeinrichtungen, die in der Elektroinstallationstechnik in Niederspannungsstromkreisen eingesetzt werden. Diese schützen Leitungen vor Beschädigung durch Erwärmung infolge zu hohen Stromes und/oder Kurzschluss. Ein Leitungsschutzschalter kann den Stromkreis bei Überlast und/oder Kurzschluss selbsttätig abschalten. Ein Leitungsschutzschalter ist ein nicht selbsttätig zurückstellendes Sicherungselement.

Leistungsschalter sind, im Gegensatz zu Leitungsschutzschaltern, für Ströme größer als 125 A vorgesehen, teilweise auch schon ab 63 Ampere. Leitungsschutzschalter sind deshalb einfacher und filigraner aufgebaut. Leitungsschutzschalter weisen üblicherweise eine Befestigungsmöglichkeit zur Befestigung auf einer so genannten Hutschiene (Tragschiene, DIN-Schiene, TH35) auf.

Leitungsschutzschalter sind in der Regel elektromechanisch aufgebaut. In einem Gehäuse weisen sie einen Schaltkontakt bzw. Arbeitsstromauslöser zur Unterbrechung (Auslösung) des elektrischen Stromes; ein Bimetall-Schutzelement bzw. Bimetall-Element zur Auslösung (Unterbrechung) bei länger anhaltenden Überstrom (Überstromschutz) respektive bei thermischer Überlast (Überlastschutz); einen elektromagnetischen Auslöser mit einer Spule zur kurzzeitigen Auslösung bei Überschreiten eines Überstromgrenzwerts bzw. im Falle eines Kurzschlusses (Kurzschlussschutz); und eine oder mehrere Lichtbogenlöschkammer(n) bzw. Einrichtungen zur Lichtbogenlöschung auf. Ferner Anschlusselemente für Leiter des zu schützenden elektrischen Stromkreises.

Grundsätzlich überwachen Leitungsschutzschalter die Höhe des elektrischen Stromes im Stromkreis und unterbrechen bei Überschreitung von Stromgrenzwerten bzw. Strom-Zeitspannen-Grenzwerten den Stromkreis.

Mit Fehlerlichtbögen sind Lichtbögen gemeint, die im Fehlerfall auftreten, d.h. die durch Fehler im Stromkreis entstehen. Beispielsweise durch schlecht geklemmte, fehlerhafte bzw. schlecht leitende Verbindungen bzw. Kontakte im elektrischen Stromkreis, z.B. in Verteilerdosen, Schaltern oder Steckdosen des Niederspannungsstromkreises.

Nicht gemeint sind (Stör-)Lichtbögen, wie sie beispielsweise beim regulären Betrieb eines Netzes, z.B. beim Schalten bzw. an den Bürsten eines Motors, auftreten.

Mit seriellen Fehlerlichtbögen sind Lichtbögen gemeint, die im Strompfad des Stromkreises auftreten, d.h. über den Lichtbogen fließt der Strom, der z.B. auch über einen Verbraucher fließt. D.h. fließt ein Strom in einem "fast unterbrochenen" Leiter entsteht an der Unterbrechungsstelle ein so genannter serieller Fehlerlichtbogen.

Brandschutzschalter sind relativ neuartige Schutzeinrichtungen für Stromkreise bzw. Spannungsnetze und dienen zum Erkennen von derartigen (insbesondere seriellen) Fehlerlichtbögen.

Brandschutzschalter können insbesondere in Hausinstallationseinrichtungen, wie Sicherungskästen, eingesetzt werden, um derartige Fehler zu erkennen und bei Vorliegen eines Fehlers bzw. Überschreitung eines Fehlerlichtbogengrenzwertes eine Initiierung zur Unterbrechung des elektrischen Stromkreises veranlassen, selbst unterbrechen bzw. ein Fehlerlichtbogenerkennungssignal abgeben.

Beispielsweise offenbart die US 2015 / 0 070 026 A1 ein Verfahren zur Erkennung der Ursache eines Spannungsverlusts vor einem Trennschalter.

Ferner offenbart die DE 10 2018 219 692 A1 ein Schutzschaltgerät für einen Niederspannungsstromkreis zur Erkennung von seriellen Fehlerlichtbögen.

Aufgabe der vorliegenden Erfindung ist es, ein Schutzschaltgerät, insbesondere einen (klassischen) Leitungsschutzschalter, zu verbessern, speziell eine Messfunktion zu ermöglichen.

Diese Aufgabe wird durch einen Schutzschaltgerät mit den Merkmalen des Patentanspruches 1 oder ein Verfahren gemäß Patentanspruch 9 gelöst.

Erfindungsgemäß ist ein Schutzschaltgerät zur Unterbrechung eines elektrischen Niederspannungsstromkreis bei Überschreitung von Strom- oder Strom-Zeitgrenzwerten vorgesehen, aufweisend:
- ein Gehäuse mit Anschlüssen für Leiter des Niederspannungsstromkreises,
- eine Unterbrechungseinheit mit Kontakten, zur Unterbrechung des Niederspannungsstromkreises innerhalb des Gehäuses,
- einen mit der Unterbrechungseinheit verbundenen Bimetall-Auslöser,
- einen mit der Unterbrechungseinheit (UB) verbundenen magnetischen Auslöser.

Erfindungsgemäß ist eine (zusätzliche) widerstandsbasierte Strommesseinrichtung vorgesehen, zur periodischen Ermittlung der Höhe des Stromes des Niederspannungsstromkreises. Die widerstandsbasierte Strommesseinrichtung ist mit einer Messeinheit verbunden. Das Schutzschaltgerät weist eine Kommunikationseinheit auf. Die Kommunikationseinheit erhält die von der Messeinheit ermittelten Stromwerte. Die Kommunikationseinheit sendet die ermittelten Stromwerte leitungsgebunden oder leitungslos aus.

Somit weist ein Schutzschaltgerät, beispielsweise ein klassischer Leitungsschutzschalter, vorteilhaft eine Messfunktionalität auf, die die Messdaten zu einer externen Einrichtung überträgt. Wobei das Schutzschaltgerät (Leitungsschutzschalter) in seinen klassischen Funktionen nicht verändert wird, insbesondere hinsichtlich des Bimetall- und magnetischen Auslösers.

Vorteilhafte Ausgestaltungen der Erfindung sind in den Unteransprüchen angegeben.

Es ist eine Fehlerlichtbogenerkennungseinheit vorgesehen ist, die von der widerstandsbasierte Strommesseinrichtung ermittelte Stromwerte für die Fehlerlichtbogenerkennung erhält. Dies hat den besonderen Vorteil, dass das (klassische) Schutzschaltgerät um eine Fehlerlichtbogenerkennung (Brandschutzschalter) ergänzt wird. Um die Fehlerlichtbogenerkennung durchzuführen, wird vorteilhaft die widerstandsbasierte Strommesseinrichtung, die bei geeignetem Widerstandsmaterial eine hohe Messgenauigkeit der Strommessung zur Verfügung stellt, für die Fehlerlichtbogenerkennung verwendet.

In einer vorteilhaften Ausgestaltung der Erfindung werden die von der widerstandsbasierten Strommesseinrichtung ermittelten Stromwerte ausschließlich für die Fehlerlichtbogenerkennung oder (oder/und) Aussendung mittels der Kommunikationseinheit verwendet.

D.h., die (zusätzliche) widerstandsbasierte Strommesseinrichtung dient nicht für den Überstromschutz und Kurzschlussschutz. D.h., die (zusätzliche) widerstandsbasierte Strommesseinrichtung dient nicht für Bimetall-Auslöser bzw. den magnetischen Auslöser.

Dies hat den besonderen Vorteil, dass ein klassisches Schutzschaltgerät, wie ein Leitungsschutzschalter, mit seinen bisherigen Einheiten (Bimetall-Auslöser, magnetischer Auslöser) unverändert bleibt, und vorteilhaft um weitere Funktionen einfach erweitert wird (Messfunktion mit Übertragung, Fehlerlichtbogenerkennung und Unterbrechung).

In einer vorteilhaften Ausgestaltung der Erfindung ist die widerstandsbasierte Strommesseinrichtung ein Teil des stromführenden Abschnittes des Bimetall-Auslösers (BM). Dies hat den besonderen Vorteil, dass eine besonders gute und platzsparende Integration der widerstandsbasierte Strommesseinrichtung in ein (bestehendes) Schutzschaltgerät ermöglicht wird.

In einer vorteilhaften Ausgestaltung der Erfindung enthält der stromführende Abschnitt des Bimetall-Auslösers das Material Wieland-F12.

Alternativ enthält der stromführende Abschnitt des Bimetall-Auslösers ein Material mit einem thermischen Ausdehnungskoeffizienten in der Größenordnung von 19,5 x 10⁻⁶ 1/K oder besser.

Dies hat den besonderen Vorteil, dass eine hohe Genauigkeit der Strommessung bei gleichzeitig hoher thermischer Stabilität, sowie geringer mechanischer Ausdehnung (Vermeidung mechanischer Spannungen im Gerät) erreicht wird.

In einer vorteilhaften Ausgestaltung der Erfindung ist die Messeinheit derart ausgestaltet, dass eine Serienschaltung eines Verstärkers mit programmierbarer Verstärkung, eines Analog-Digital-Umsetzers und einer Recheneinheit vorgesehen ist.

Dies hat den besonderen Vorteil, dass eine einfache Realisierung für eine Messeinheit und ein einfacher Anschluss der Messeinheit an die widerstandsbasierte Strommesseinrichtung gegeben ist.

In einer vorteilhaften Ausgestaltung der Erfindung ist der Analog-Digital-Umsetzer (ADC) als 24-bit Delta-Sigma Multi-Level Modulator Analog-Digital-Umsetzer ausgestaltet.

Dies hat den besonderen Vorteil, dass eine effektive und passende Analog-Digital-Umsetzung gegeben ist. Die analogen Werte, die vom Shunt in Form eines Spannungsabfalls in Bezug auf den durch den Shunt fließenden Strom empfangen werden, werden durch die Verwendung desselben Referenzpotentials im Mess-IC direkt in digitale Stromwerte umgewandelt. Auf diese Weise werden die Offsetfehler sehr geringgehalten und somit hochgenaue Werte erzielt.

Dasselbe gilt für die Messung der Spannung, der einzige Unterschied besteht darin, dass die Analogwerte von einer Spannungsteiler-Schaltung erhalten werden.

Es ist die Fehlerlichtbogenerkennungseinheit mit der Kommunikationseinheit verbunden.

Dies hat den besonderen Vorteil, dass neben den Strommessdaten auch Daten der Fehlerlichtbogenerkennungseinheit gesendet werden können. SO ist eine erweiterte Messfunktionalität gegeben.

In einer vorteilhaften Ausgestaltung der Erfindung ist das Schutzschaltgerät ein Leitungsschutzschalter.

Dies hat den besonderen Vorteil, dass eine einfache Erweiterung eines bestehenden Konzepts unter Beibehaltung der bisherigen erprobten Funktionalität und ohne signifikanten Eingriff in diese gegeben ist.

Erfindungsgemäß wird weiterhin ein paralleles Verfahren für ein Schutzschaltgerät für einen elektrischen Niederspannungsstromkreis beansprucht, mit den bereits genannten Vorteilen.

Alle Ausgestaltungen, sowohl in abhängiger Form rückbezogen auf die unabhängigen Patentansprüche, als auch rückbezogen lediglich auf einzelne Merkmale oder Merkmalskombinationen von Patentansprüchen, bewirken eine Verbesserung eines Schutzschaltgerätes.

Die beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit der Zeichnung näher erläutert werden.

Dabei zeigt die Zeichnung:
Figur 1 eine erste Darstellung eines Schutzschaltgerätes zur Erläuterung der Erfindung,
Figur 2 eine zweite Darstellung eines Schutzschaltgerätes zur Erläuterung der Erfindung,
Figur 3 eine dritte Darstellung eines Schutzschaltgerätes zur Erläuterung der Erfindung,
Figur 4 eine Darstellung einer widerstandsbasierten Strommesseinrichtung zur Erläuterung der Erfindung,
Figur 5 eine vierte Darstellung eines Schutzschaltgerätes zur Erläuterung der Erfindung,

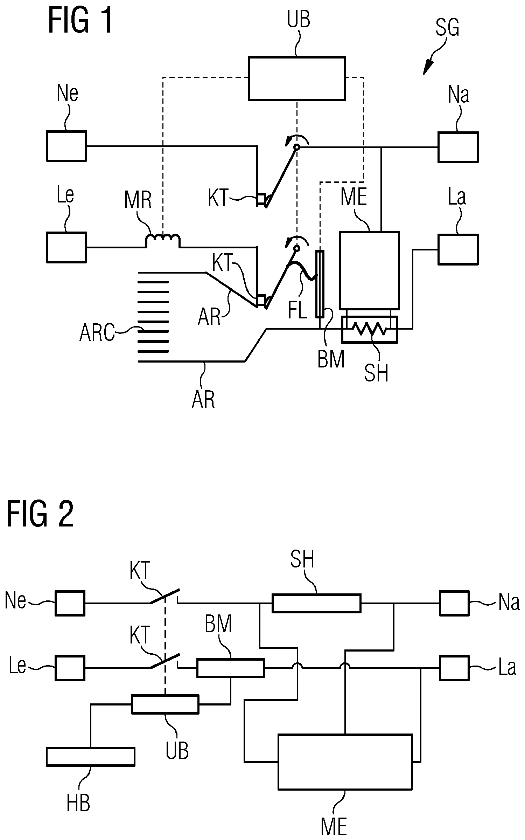

Figur 1 zeigt eine Darstellung eines Schutzschaltgerätes SG für einen Niederspannungsstromkreis, im Beispiel für einen einphasigen Wechselstromkreis, wie beispielsweise einen Leitungsschutzschalter, aufweisend:
- ein nicht dargestelltes Gehäuse mit eingangsseitigen Anschlüssen Ne, Le und ausgangsseitigen Anschlüssen Na, La, für die Leiter des Niederspannungsstromkreises, im Beispiel wird an den eingangsseitigen Anschlüssen Ne, Le eine Energiequelle und an den ausgangseitigen Anschlüssen Na, La ein oder mehrere Verbraucher angeschlossen, die eingangs- und ausgangsseitige Anschlüsse Ne, Na können für den Neutralleiter und die eingangs- und ausgangsseitigen Anschlüsse Le, La können für den Phasenleiter des Niederspannungsstromkreises vorgesehen sein,
- eine Unterbrechungseinheit UB mit Kontakten KT, zur Unterbrechung des Niederspannungsstromkreises innerhalb des Gehäuses, die Verbindung zwischen Unterbrechungseinheit UB und Kontakten KT ist durch eine unterbrochene Strichlinie eingezeichnet,
- einen mit der Unterbrechungseinheit UB verbundenen Bimetall-Auslöser BM, durch eine unterbrochene Strichlinie eingezeichnet,
- einen mit der Unterbrechungseinheit UB verbundenen magnetischen Auslöser MR, durch eine unterbrochene Strichlinie eingezeichnet,
- eine widerstandsbasierte Strommesseinrichtung SH, im Beispiel ein Widerstand, Shunt, Shuntwiderstand, Messwiderstand zur periodischen Ermittlung der Höhe des Stromes des Niederspannungsstromkreises,
- eine Messeinheit ME, die mit der Strommesseinrichtung SH verbunden ist. Hierbei ist die Messeinheit mit beiden Anschlüssen der Strommesseinrichtung SH, beispielsweise dem Messwiderstand, verbunden. Die Strommesseinrichtung SH ist in einem Leiter des Niederspannungsstromkreises angeordnet. Die Messeinheit ME ist ferner mit dem anderen Leiter des Niederspannungsstromkreises verbunden. Im Beispiel ist die Strommesseinrichtung SH im Phasenleiter, d.h. im Strompfad zwischen den Anschlüssen Le, La, angeordnet; die Messeinheit ME ist dann (andererseits) mit dem Neutralleiter Ne, Na verbunden.

Die Messeinheit ME weist im Beispiel gemäß Figur 1 eine (nicht näher dargestellte, interne) Kommunikationseinheit auf, die von der Messeinheit ME ermittelte Stromwerte erhält. Die Kommunikationseinheit sendet die ermittelten Stromwerte leitungsgebunden oder leitungslos aus.

Der Bimetall-Auslöser BM bzw. Bimetall bzw. Bimetall-Schutzelement ist in einem Leiter des Niederspannungsstromkreises vorgesehen, über den der Strom des Niederspannungsstromkreises fließt. Im Beispiel gemäß Figur 1 ist der Bimetall-Auslöser BM im Phasenleiter, d.h. im Strompfad zwischen den Anschlüssen Le, La, angeordnet. Bei zu hohen Strömen im Niederspannungsstromkreis, die für eine gewisse Zeitdauer anliegen, erwärmt sich der Bimetall-Auslöser BM, verformt sich infolge der Erwärmung, die Verformung führt über die Verbindung zur Unterbrechungseinheit UB zu einer Auslösung der Unterbrechungseinheit UB, die in Folge die Kontakte KT öffnet und zur Unterbrechung des elektrischen Stromkreises führt. D.h. bei Überschreitung von Strom-Zeitgrenzwerten erfolgt eine Unterbrechung durch das Bimetall, dies wird auch als sogenannte thermische Auslösung bezeichnet.

Der magnetische Auslöser MR ist ebenfalls in einem Leiter des Niederspannungsstromkreises vorgesehen, über den der Strom des Niederspannungsstromkreises fließt. Im Beispiel gemäß Figur 1 ist der magnetische Auslöser MR im Phasenleiter, d.h. im Strompfad zwischen den Anschlüssen Le, La, angeordnet. Also in Serie zum Bimetall-Auslöser BM und zur widerstandsbasierten Strommesseinrichtung SH. Der magnetische Auslöser MR weist eine Spule auf, durch die der elektrische Strom des Niederspannungsstromkreises fließt. Überschreitet der elektrische Strom gewisse Stromgrenzwerte wird das Magnetfeld der Spule so groß, dass Eisenteile des magnetischen Auslösers MR angezogen werden, die die Unterbrechungseinheit UB auslösen und in Folge die Kontakte KT öffnet und zur Unterbrechung des elektrischen Stromkreises führt. Dies wird als magnetische Auslösung bezeichnet, die bei Überschreitung von Stromgrenzwerten bzw. bei Kurzschluss im Niederspannungsstromkreis eine quasi sofortige Unterbrechung des Niederspannungsstromkreises bewirkt.

Die Kontakte KT können eine Lichtbogenlöscheinrichtung ARC aufweisen, die einen beim Öffnen der Kontakte entstehenden Lichtbogen löschen. Die Lichtbogenlöscheinrichtung kann einen so genannten Lichtbogenläufer (arc runner) AR aufweisen.

Gemäß Figur 1 ist der eingangsseitige Anschluss Ne, beispielsweise für einen Neutralleiter (eingangsseitiger Neutralleiteranschluss), über einen ersten Teilkontakt der Kontakte KT mit dem ausgangsseitigen Anschluss Na verbunden (ausgangsseitiger Neutralleiteranschluss). Der eingangsseitige Anschluss Le, beispielsweise für einen Phasenleiter (eingangsseitiger Phasenleiteranschluss), ist über den magnetischen Auslöser MR, den zweiten Teilkontakt der Kontakte KT, dem Bimetall-Auslöser BM und der widerstandsbasierten Strommesseinrichtung SH mit dem ausgangsseitigen Anschluss La (ausgangsseitiger Phasenleiteranschluss) verbunden. Dem zweiten Teilkontakt der Kontakte KT ist die Lichtbogenlöscheinrichtung ARC mit Lichtbogenläufer AR parallelgeschaltet. Der Strom kann vom zweiten Teilkontakt KT über einen flexiblen Leiter FL zum Bimetall-Auslöser BM fließen.

Die Messeinheit ME ist einerseits mit beiden Anschlüssen der Strommesseinrichtung SH, im Beispiel ein Messwiderstand, verbunden und andererseits mit dem ausgangsseitigen Anschluss Na (ausgangsseitiger Neutralleiteranschluss).

Figur 2 zeigt eine Anordnung gemäß Figur 1, mit dem Unterschied, dass die widerstandsbasierte Strommesseinrichtung SH im Neutralleiter, d.h. zwischen den eingangs- und ausgangsseitige Anschlüsse Ne, Na angeordnet ist, so dass der Strom des Neutralleiters über widerstandsbasierte Strommesseinrichtung SH fließt. Die Messeinheit ME ist einerseits mit den beiden Anschlüssen der widerstandsbasierten Strommesseinrichtung SH im Neutralleiter verbunden und andererseits mit dem Phasenleiter. Gemäß Figur 2 ist der eingangsseitige Anschluss Ne, beispielsweise für den Neutralleiter (eingangsseitiger Neutralleiteranschluss), über den ersten Teilkontakt der Kontakte KT, der widerstandsbasierten Strommesseinrichtung SH mit dem ausgangsseitigen Anschluss Na verbunden (ausgangsseitiger Neutralleiteranschluss).

Der eingangsseitige Anschluss Le, beispielsweise für den Phasenleiter (eingangsseitiger Phasenleiteranschluss), ist über den (nicht dargestellten) magnetischen Auslöser MR, den zweiten Teilkontakt der Kontakte KT, dem Bimetall-Auslöser BM mit dem ausgangsseitigen Anschluss La (ausgangsseitiger Phasenleiteranschluss) verbunden.

Die Unterbrechungseinheit UB weist ferner eine mechanische Handhabe HB auf, zur Unterbrechung bzw. zum Schließen des Niederspannungsstromkreises auf manuellem Wege. Diese kann auch in den anderen Darstellungen (Fig 1, Fig 3, Fig 5) vorgesehen sein.

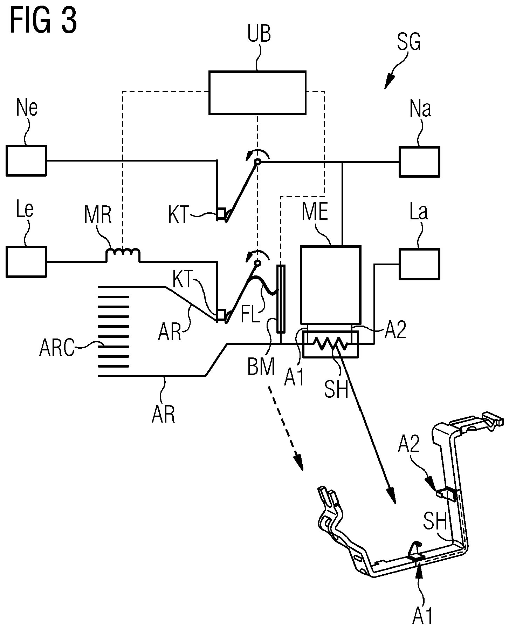

Figur 3 zeigt eine Darstellung gemäß Figur 1, mit einer Detaildarstellung einer erfindungsgemäßen kombinierten Bimetall-Auslöser BM und widerstandsbasierten Strommesseinrichtung SH. Die widerstandsbasierte Strommesseinrichtung SH ist ein Teil des stromführenden Abschnittes eines Bimetall-Auslösers BM. Im Beispiel der Mittelteil eines stromführenden Abschnittes des Bimetall-Auslösers BM. Erfindungsgemäß enthält der stromführende Abschnitt des Bimetall-Auslösers BM das Material Wieland-F12. Alternativ kann der stromführende Abschnitt des Bimetall-Auslösers BM ein Material mit einem thermischen Ausdehnungskoeffizienten in der Größenordnung von bzw. von 19,5 x 10⁻⁶ 1/K oder besser enthalten.

D.h. der Mittelteil des stromführenden Abschnittes weist beispielsweise das Material Wieland-F12 als Messwiderstand (widerstandsbasierte Strommesseinrichtung) auf, während sich seitlich (links und rechts) das Material des Bimetall-Auslösers anschließt. D.h. eine Serienschaltung: Material Bimetall-Auslöser, Messwiderstand (widerstandsbasierte Strommesseinrichtung), Material Bimetall-Auslöser. Der Mittelteil bzw. der den Messwiderstand enthaltende Abschnitt weist einen ersten Anschluss A1 und einen zweiten Anschluss A2 auf, zur Verbindung mit der Messeinheit ME.

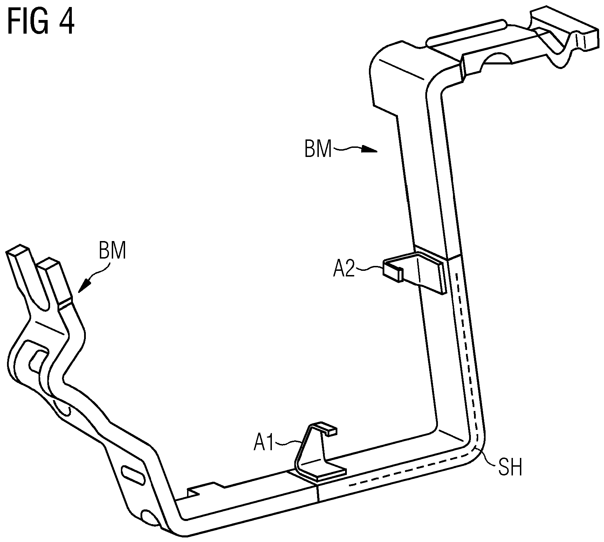

In Figur 4 ist nochmals eine Detaildarstellung.

Hiermit wird vorteilhaft die Größe des Schutzschaltgerätes reduziert (bzw. nicht erhöht). Die Strommesseinrichtung SH ist im Inneren des Schutzschaltgerätes ausgeführt. Um den Platzbedarf im Schutzschaltgerät zu reduzieren, wird der Bimetall-Auslöser BM bzw. dessen Bimetallträger so modifiziert, dass er vorteilhaft einen Strommess-Shunt aus dem Material Wieland-F12 enthält, bei dem es sich um eine Widerstandslegierung handelt, die sich durch ihren niedrigen Temperaturkoeffizienten des elektrischen Widerstands und ihre geringe thermisch-elektromotorische Kraft gegenüber Kupfer auszeichnet. Die Legierung weist auch eine hohe Langzeitstabilität ihres elektrischen Widerstandes auf.

Figur 3 und Figur 4 zeigen eine Realisierung mit dieser widerstandsbasierten Strommesseinrichtung. Das Bimetall selbst kann nicht als widerstandsbasierten Strommesseinrichtung verwendet werden, da sein Widerstand hoch und nicht temperaturstabil ist. Eine genaue Strommessung wäre damit nicht möglich. Die widerstandsbasierte Strommesseinrichtung kann im Phasenleiter, als auch im Neutralleiter angeordnet sein.

Wenn eine widerstandsbasierten Strommesseinrichtung in den Strompfad eingeführt wird, verändert es die thermischen und Kurzschlusseigenschaften des Geräts. Dieses Problem wird durch die Verwendung des Materials Wieland F12 gelöst, das einen thermischen Ausdehnungskoeffizienten von 19,5 x 10^-6 /K hat.

Der Bimetallträger gemäß Figur 4 kann durch eine Kombination aus Schweißen und einem Spezialwerkzeug zum Drücken Messwiderstandes auf den Bimetallträger hergestellt werden. Der endgültige Bimetallträger besteht aus dem beidseitigen Trägermaterial, z.B. aus Kupfer oder (oder/und) Stahl, wobei das hochgenaue Widerstandsmaterial in der Mitte angeschweißt ist.

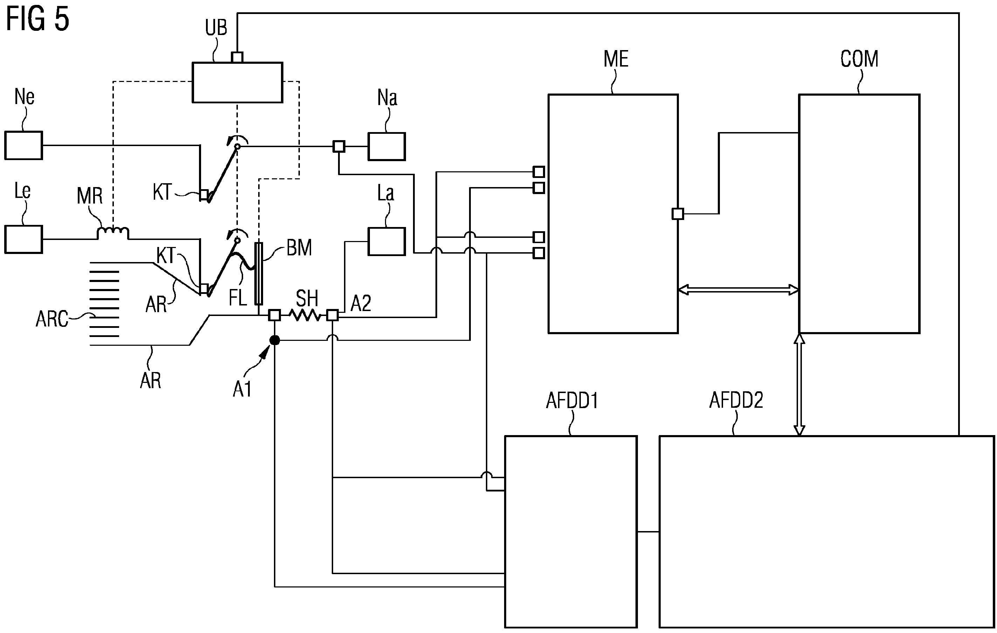

Figur 5 zeigt eine Anordnung gemäß den vorhergehenden Figuren, mit dem Unterschied, dass die Messeinheit ME mit einer eigenständigen Kommunikationseinheit COM verbunden ist. Weiterhin ist eine Fehlerlichtbogenerkennungseinheit vorgesehen ist, die im Beispiel zweiteilig ausgeführt ist, eine erste Fehlerlichtbogenerkennungseinheit AFDD1, die mit einer zweiten Fehlerlichtbogenerkennungseinheit AFDD2 verbunden ist, wobei die erste Fehlerlichtbogenerkennungseinheit AFDD1 mit der widerstandsbasierten Strommesseinrichtung SH verbunden ist, sowie die zweite Fehlerlichtbogenerkennungseinheit AFDD2 mit der Unterbrechungseinheit UB verbunden ist, zur Unterbrechung des Niederspannungsstromkreises bei Erkennung von Fehlerlichtbögen. Ferner kann die Fehlerlichtbogenerkennungseinheit, im Beispiel die zweite Fehlerlichtbogenerkennungseinheit AFDD2, mit der Kommunikationseinheit COM verbunden sein, zur Aussendung von Informationen hinsichtlich der Fehlerlichtbogenerkennung, etc.

Die Fehlerlichtbogenerkennungseinheit erhält die von der widerstandsbasierten Strommesseinrichtung ermittelten Stromwerte für die Fehlerlichtbogenerkennung (parallel zur Messeinheit).

Die erste Fehlerlichtbogenerkennungseinheit AFDD1 kann beispielsweise Funktionen zur Signalaufbereitung der zugeführten Stromwerte und Spannungswerte (von den Leitern) aufweisen. Die zweite Fehlerlichtbogenerkennungseinheit AFDD2 kann beispielsweise eine Auswertungseinheit, beispielsweise mit einem Mikroprozessor, zur Ermittlung von Fehlerlichtbögen aufweisen.

Durch die erfindungsgemäßen Änderungen kann eine Messfunktion eingeführt werden. Die Messeinheit kann einen programmierbaren Verstärker, bei dem die Verstärkung programmiert werden kann, einen Analog-Digital-Umsetzers und eine Recheneinheit, beispielsweise einen Mikroprozessor, aufweisen. Der Analog-Digital-Umsetzer kann als 24-bit Delta-Sigma Multi-Level Modulator ausgestaltet sein.

Der programmierbare Verstärker ist beispielsweise an beiden Seiten des Messwiderstandes angeschlossen.

Die von der Recheneinheit bzw. Calculation Engine erhaltenen Stromwerte werden über die Kommunikationseinheit, beispielsweise mit einer UART-Schnittstelle, mit drahtloser Kommunikation, drahtgebundener Kommunikation, optischen Systemen oder ähnlich ausgesendet.

Somit ist durch die erfindungsgemäße widerstandsbasierte Strommesseinrichtung SH und Messeinheit ME eine Strommessung mit einer sehr hohen Genauigkeit im Bereich von 1% bzw. besser/weniger platzsparend (durch die erfindungsgemäßen Modifikationen) möglich.

Ein Schutzschaltgerät bzw. insbesondere Leitungsschutzschalter kann ohne zusätzlichen Platzbedarf durch Hinzufügen einer widerstandsbasierte Strommesseinrichtung in ein Messgerät umgewandelt werden, das entsprechende Daten bereitstellt.

Ein vorhandener Leiter als Originalteil des Schutzschaltgerätes wird als Messwiderstand zur Erfassung des Stroms verwendet, durch Änderung der stromführenden Leiterbahn am Bimetall. Dies kann sehr kostengünstig durchgeführt werden.

Vorteilhaft kann in einem Leitungsschutzschalter, z.B. mit integrierter Brandschutzschalterfunktion, eine Messungs- und Kommunikationsfunktionalität hinzugefügt werden.

Durch die widerstandsbasierte Strommesseinrichtung SH kann das Problem einer Phasenverschiebung bei der Strommessung vermieden werden.

Durch den widerstandsbasierte Strommesseinrichtung SH mit geringem Widerstandswert fällt nur eine geringe Verlustleistung ab, die thermische Probleme vermeidet.

Durch die Erfindung kann in einem Leitungsschutzschalter, z.B. mit einer Breite von 18 mm (1 TE), platzsparend eine Messfunktion integriert werden.

Erfidungsgemäß wird ein modifizierter Bimetallträger in einem Schutzschaltgeräte als primärer Pfad für den Stromfluss von den Anschlüssen L und N durch das Gerät verwendet. Um den Strom durch den Baustein zu messen, wird dieser primäre stromführende Pfad durch den Bimetallträger so modifiziert, dass er einen Strommessmechanismus enthält, was jedoch die thermischen und Kurzschlusseigenschaften des Bausteins verändert. Die Wahl des Materials ist neben dem Fügeprozess sehr wichtig, da sich das Material ausdehnt und seine thermischen Spannungen an die geschweißten Komponenten weitergibt, was das Auslöseverhalten auf der thermischen Seite des Bimetalls verändert. Das Vorhandensein von Wärmespannungen an den Verbindungsstellen kann die Anschlüsse zusätzlich erwärmen und die Auswirkungen des Bimetalls verändern. Durch die verwendete Lösung und das Material kann eine Strommessung mit einer sehr hohen Genauigkeit und einem geringen Einfluss auf die übrigen Teile des Schutzschaltgerätes erreicht werden.

Obwohl die Erfindung im Detail durch das Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den durch die Patentansprüche definierten Schutzumfang der Erfindung zu verlassen.

## Patentansprüche

1. Schutzschaltgerät (SG) zur Unterbrechung eines elektrischen Niederspannungsstromkreis bei Überschreitung von Strom- oder Strom-Zeitgrenzwerten, aufweisend:
- ein Gehäuse mit Anschlüssen (Ne, Na, Le, La) für Leiter des Niederspannungsstromkreises,
- eine Unterbrechungseinheit (UB) mit Kontakten (KT), zur Unterbrechung des Niederspannungsstromkreises innerhalb des Gehäuses,
- einen mit der Unterbrechungseinheit (UB) verbundenen Bimetall-Auslöser (BM),
- einen mit der Unterbrechungseinheit (UB) verbundenen magnetischen Auslöser (MR),
wobei widerstandsbasierte Strommesseinrichtung (SH), zur periodischen Ermittlung der Höhe des Stromes des Niederspannungsstromkreises, vorgesehen ist, die mit einer Messeinheit (ME) verbunden ist, **dadurch gekennzeichnet,**
**dass** das Schutzschaltgerät eine Kommunikationseinheit (COM) aufweist, die von der Messeinheit (ME) ermittelte Stromwerte mittels einer ersten Kommunikationsverbindung von der Messeinheit (ME) erhält,
**dass** die Kommunikationseinheit (COM) die ermittelten Stromwerte leitungsgebunden oder leitungslos aussendet,
**dass** eine Fehlerlichtbogenerkennungseinheit (AFDD1, AFDD2) vorgesehen ist, die von der widerstandsbasierte Strommesseinrichtung (SH) ermittelte Stromwerte für die Fehlerlichtbogenerkennung parallel zur Messeinheit (ME) erhält,
**dass** die Fehlerlichtbogenerkennungseinheit (AFDD1, AFDD2) mittels einer zur ersten Kommunikationsverbindung verschiedenen zweiten Kommunikationsverbindung mit der Kommunikationseinheit (COM) verbunden ist, um Daten der Fehlerlichtbogenerkennungseinheit (AFDD1, AFDD2) auszusenden.

2. Schutzschaltgerät (SG) nach Patentanspruch 1,
**dadurch gekennzeichnet,**
**dass** die von der widerstandsbasierte Strommesseinrichtung (SH) ermittelten Stromwerte ausschließlich für die Fehlerlichtbogenerkennung oder Aussendung mittels der Kommunikationseinheit (COM) verwendet werden.

3. Schutzschaltgerät (SG) nach Patentanspruch 1 oder 2,
**dadurch gekennzeichnet,**
**dass** die widerstandsbasierte Strommesseinrichtung (SH) ein Teil des stromführenden Abschnittes des Bimetall-Auslösers (BM) ist.

4. Schutzschaltgerät (SG) nach Patentanspruch 3,
**dadurch gekennzeichnet,**
**dass** der stromführende Abschnitt des Bimetall-Auslösers (BM) das Material Wieland-F12 enthält.

5. Schutzschaltgerät (SG) nach Patentanspruch 3,
**dadurch gekennzeichnet,**
**dass** der stromführende Abschnitt des Bimetall-Auslösers (BM) ein Material mit einem thermischen Ausdehnungskoeffizienten in der Größenordnung von 19,5 x 10⁻⁶ 1/K oder besser enthält.

6. Schutzschaltgerät (SG) nach einem der vorhergehenden Patentansprüche,
**dadurch gekennzeichnet,**
**dass** die Messeinheit (ME) derart ausgestaltet ist, dass eine Serienschaltung eines Verstärkers mit programmierbarer Verstärkung (PGA), eines Analog-Digital-Umsetzers (ADC) und einer Recheneinheit vorgesehen ist.

7. Schutzschaltgerät (SG) nach Patentanspruch 6,
**dadurch gekennzeichnet,**
**dass** der Analog-Digital-Umsetzer (ADC) als 24-bit Delta-Sigma Multi-Level Modulator Analog-Digital-Umsetzer ausgestaltet ist.

8. Schutzschaltgerät (SG) nach einem der vorhergehenden Patentansprüche,
**dadurch gekennzeichnet,**
**dass** das Schutzschaltgerät ein Leitungsschutzschalter ist.

9. Verfahren für ein Schutzschaltgerät (SG) zur Unterbrechung eines elektrischen Niederspannungsstromkreis bei Überschreitung von Strom- oder Strom-Zeitgrenzwerten, mit einem Gehäuse mit Anschlüssen (Ne, Na, Le, La) für Leiter des Niederspannungsstromkreises, einer Unterbrechungseinheit (UB) mit Kontakten (KT), zur Unterbrechung des Niederspannungsstromkreises innerhalb des Gehäuses, einem mit der Unterbrechungseinheit (UB) verbundenen Bimetall-Auslöser (BM), einem mit der Unterbrechungseinheit (UB) verbundenen magnetischen Auslöser (MR),
wobei eine widerstandsbasierte Strommesseinrichtung (SH), zur periodischen Ermittlung der Höhe des Stromes des Niederspannungsstromkreises, vorgesehen wird, die mit einer Messeinheit (ME) verbunden ist, die mittels einer ersten Kommunikationsverbindung mit einer Kommunikationseinheit (COM) verbunden ist, so dass die mittels der widerstandsbasierten Strommesseinrichtung (SH) ermittelten Stromwerte leitungsgebunden oder leitungslos ausgesendet werden,
dass eine Fehlerlichtbogenerkennungseinheit (AFDD1, AFDD2) vorgesehen ist, die von der widerstandsbasierte Strommesseinrichtung (SH) ermittelte Stromwerte für die Fehlerlichtbogenerkennung parallel zur Messeinheit (ME) erhält, und
dass die Fehlerlichtbogenerkennungseinheit (AFDD1, AFDD2) mittels einer zur ersten Kommunikationsverbindung verschiedenen zweiten Kommunikationsverbindung mit der Kommunikationseinheit (COM) verbunden ist, um Daten der Fehlerlichtbogenerkennungseinheit (AFDD1, AFDD2) auszusenden.

## Claims

1. Circuit breaker device (SG) for interrupting an electrical low-voltage circuit when current or current-time limit values are exceeded, having:
- a housing with connections (Ne, Na, Le, La) for conductors of the low-voltage circuit,
- an interruption unit (UB) with contacts (KT) for interrupting the low-voltage circuit within the housing,
- a bimetallic tripping device (BM) connected to the interruption unit (UB), and
- a magnetic tripping device (MR) connected to the interruption unit (UB),
wherein a resistance-based current measuring apparatus (SH) is provided for periodically ascertaining the magnitude of the current of the low-voltage circuit, and is connected to a measuring unit (ME), **characterized**
**in that** the circuit breaker device has a communication unit (COM) that receives current values ascertained by the measuring unit (ME) from the measurement unit (ME) by means of a first communication connection,
**in that** the communication unit (COM) transmits the ascertained current values in a wired or wireless manner,
**in that** an arcing fault detection unit (AFDD1, AFDD2) is provided, which receives current values ascertained by the resistance-based current measuring apparatus (SH) for the arcing fault detection in parallel with the measuring unit (ME),
**in that** the arcing fault detection unit (AFDD1, AFDD2) is connected to the communication unit (COM) by means of a second communication connection, which is different to the first communication connection, in order to transmit data from the arcing fault detection unit (AFDD1, AFDD2).

2. Circuit breaker device (SG) according to Patent Claim 1,
**characterized**
**in that** the current values ascertained by the resistance-based current measuring apparatus (SH) are used exclusively for the arcing fault detection or transmission by means of the communication unit (COM).

3. Circuit breaker device (SG) according to Patent Claim 1 or 2,
**characterized**
**in that** the resistance-based current measuring apparatus (SH) is part of the current-carrying section of the bimetallic tripping device (BM).

4. Circuit breaker device (SG) according to Patent Claim 3,
**characterized**
**in that** the current-carrying section of the bimetallic tripping device (BM) contains the material Wieland-F12.

5. Circuit breaker device (SG) according to Patent Claim 3,
**characterized**
**in that** the current-carrying section of the bimetallic tripping device (BM) contains a material with a coefficient of thermal expansion of the order of magnitude of 19.5 x 10⁻⁶ 1/K or better.

6. Circuit breaker device (SG) according to one of the preceding patent claims,
**characterized**
**in that** the measuring unit (ME) is configured in such a way that a series circuit comprising a programmable gain amplifier (PGA), an analogue-to-digital converter (ADC) and a computing unit is provided.

7. Circuit breaker device (SG) according to Patent Claim 6,
**characterized**
**in that** the analogue-to-digital converter (ADC) is in the form of a 24-bit delta-sigma multi-level modulator analogue-to-digital converter.

8. Circuit breaker device (SG) according to one of the preceding patent claims,
**characterized**
**in that** the circuit breaker device is a miniature circuit breaker.

9. Method for a circuit breaker device (SG) for interrupting an electrical low-voltage circuit when current or current-time limit values are exceeded, having a housing with connections (Ne, Na, Le, La) for conductors of the low-voltage circuit, an interruption unit (UB) with contacts (KT) for interrupting the low-voltage circuit within the housing, a bimetallic tripping device (BM) connected to the interruption unit (UB), and a magnetic tripping device (MR) connected to the interruption unit (UB),
wherein a resistance-based current measuring apparatus (SH) is provided for periodically ascertaining the magnitude of the current of the low-voltage circuit, and is connected to a measuring unit (ME) that is connected to a communication unit (COM) by means of a first communication connection, such that the current values ascertained by means of the resistance-based current measuring apparatus (SH) are transmitted in a wired or wireless manner,
in that an arcing fault detection unit (AFDD1, AFDD2) is provided, which receives current values ascertained by the resistance-based current measuring apparatus (SH) for the arcing fault detection in parallel with the measuring unit (ME),
in that the arcing fault detection unit (AFDD1, AFDD2) is connected to the communication unit (COM) by means of a second communication connection, which is different to the first communication connection, in order to transmit data from the arcing fault detection unit (AFDD1, AFDD2).

## Revendications

1. Appareil disjoncteur (SG) destiné à l'interruption d'un circuit de courant électrique basse tension lorsque des valeurs limites de courant ou des valeurs limites de courant et de temps sont dépassées, présentant :
- un boîtier avec des bornes (Ne, Na, Le, La) pour des conducteurs du circuit de courant de courant basse tension,
- une unité d'interruption (UB) avec des contacts (KT), destinée à l'interruption du circuit de courant basse tension au sein du boîtier,
- un déclencheur bimétallique (BM) relié à l'unité d'interruption (UB),
- un déclencheur magnétique (MR) relié à l'unité d'interruption (UB),
dans lequel un système de mesure de courant basé sur des résistances (SH), destiné à la détermination périodique de la hauteur du courant du circuit de courant basse tension, est prévu qui est relié à une unité de mesure (ME), **caractérisé en ce que** l'appareil disjoncteur présente une unité de communication (COM) qui reçoit par l'unité de mesure (ME) les valeurs de courant déterminées par l'unité de mesure (ME) au moyen d'une première connexion de communication,
**en ce que** l'unité de communication (COM) émet les valeurs de courant déterminées par câble ou sans fil,
**en ce qu'**une unité de reconnaissance d'arc de coupure (AFDD1, AFDD2) est prévue, qui reçoit parallèlement à l'unité de mesure (ME) les valeurs de courant déterminées par le système de mesure de courant basé sur des résistances (SH) pour la reconnaissance d'arc de coupure,
**en ce que** l'unité de reconnaissance d'arc de coupure (AFDD1, AFDD2) est reliée à l'unité de communication (COM) au moyen d'une seconde connexion de communication différente de la première connexion de communication pour émettre des données de l'unité de reconnaissance d'arc de coupure (AFDD1, AFDD2).

2. Appareil disjoncteur (SG) selon la revendication 1,
**caractérisé en ce que**
les valeurs de courant déterminées par le système de mesure de courant basé sur des résistances (SH) sont utilisées exclusivement pour la reconnaissance d'arc de coupure ou l'émission au moyen de l'unité de communication (COM).

3. Appareil disjoncteur (SG) selon la revendication 1 ou 2,
**caractérisé en ce que**
le système de mesure de courant basé sur des résistances (SH) est une partie de la section conductrice de courant du déclencheur bimétallique (BM).

4. Appareil disjoncteur (SG) selon la revendication 3,
**caractérisé en ce que**
la section conductrice de courant du déclencheur bimétallique (BM) contient le matériau Wieland F-12.

5. Appareil disjoncteur (SG) selon la revendication 3,
**caractérisé en ce que**
la section conductrice de courant du déclencheur bimétallique (BM) contient un matériau avec un coefficient de dilatation thermique dans l'ordre de grandeur de 19,5 x 10⁻⁶ 1/K ou plus.

6. Appareil disjoncteur (SG) selon l'une quelconque des revendications précédentes,
**caractérisé en ce que**
l'unité de mesure (ME) est configurée de telle sorte qu'un circuit série d'un amplificateur avec une amplification programmable (PGA), d'un convertisseur analogique-numérique (ADC) et d'une unité de calcul est prévu.

7. Appareil disjoncteur (SG) selon la revendication 6,
**caractérisé en ce que**
le convertisseur analogique-numérique (ADC) est configuré en tant que convertisseur analogique-numérique à modulateur Delta-Sigma 24 bits à niveaux multiples.

8. Appareil disjoncteur (SG) selon l'une quelconque des revendications précédentes,
**caractérisé en ce que**
l'appareil disjoncteur est un coupe-circuit.

9. Procédé pour un appareil disjoncteur (SG) destiné à l'interruption d'un circuit de courant électrique basse tension lorsque des valeurs limites de courant ou des valeurs limites de courant et de temps sont dépassées, avec un boîtier avec des bornes (Ne, Na, Le, La) pour des conducteurs du circuit de courant électrique basse tension, une unité d'interruption (UB) avec des contacts (KT), destinée à l'interruption du circuit de courant basse tension au sein du boîtier, un déclencheur bimétallique (BM) relié à l'unité d'interruption (UB), un déclencheur magnétique (MR) relié à l'unité d'interruption (UB), dans lequel un système de mesure de courant basé sur des résistances (SH), destiné à la détermination périodique de la hauteur du courant du circuit de courant basse tension, est prévu, qui est relié à une unité de mesure (ME) qui est reliée à une unité de communication (COM) au moyen d'une première connexion de communication, de sorte que les valeurs de courant déterminées au moyen du système de mesure de courant basé sur des résistances (SH) sont émises par câble ou sans fil,
en ce qu'une unité de reconnaissance d'arc de coupure (AFDD1, AFDD2) est prévue, qui reçoit parallèlement à l'unité de mesure (ME) les valeurs de courant déterminées par le système de mesure de courant basé sur des résistances (SH) pour la reconnaissance d'arc de coupure, et
en ce que l'unité de reconnaissance d'arc de coupure (AFDD1, AFDD2) est reliée à l'unité de communication (COM) au moyen d'une seconde connexion de communication différente de la première connexion de communication pour émettre des données de l'unité de reconnaissance d'arc de coupure (AFDD1, AFDD2).
